Europäisches Patentamt

European Patent Office

Office européen des brevets

(19)

(11) **EP 1 102 975 B1**

(12) **FASCICULE DE BREVET EUROPEEN**

(45) Date de publication et mention
de la délivrance du brevet:
**10.09.2003 Bulletin 2003/37**

(21) Numéro de dépôt: **99938352.4**

(22) Date de dépôt: **26.07.1999**

(51) Int Cl.$^7$: **G01N 21/35**, G01J 5/20

(86) Numéro de dépôt international:
**PCT/EP99/05365**

(87) Numéro de publication internationale:
**WO 00/008442 (17.02.2000 Gazette 2000/07)**

(54) **PROCEDE DE MESURE DE L'ABSORPTION SPECTRALE D'UN CORPS ET DISPOSITIF POUR LA MISE EN OEUVRE DU PROCEDE**

VERFAHREN ZUR MESSUNG DER SPEKTRALEN ABSORPTION EINES KÖRPERS UND VORRICHTUNG ZUR DURCHFÜHRUNG DES VERFAHRENS

METHOD FOR MEASURING SPECTRAL ABSORPTION IN A BODY AND DEVICE THEREFOR

(84) Etats contractants désignés:
**AT BE CH CY DE DK ES FI FR GB GR IE IT LI LU MC NL PT SE**

(30) Priorité: **07.08.1998 FR 9810233**

(43) Date de publication de la demande:
**30.05.2001 Bulletin 2001/22**

(73) Titulaire: **Schlumberger Industries, S.A., RMS Service Propriete Intellectuelle 92120 Montrouge Cédex (FR)**

(72) Inventeur: **GRASDEPOT, François F-92260 Fontenay aux Roses (FR)**

(74) Mandataire: **Feray, Valérie et al Feray Lenne Conseil 44/52, Rue de la Justice 75020 Paris (FR)**

(56) Documents cités:
**EP-A- 0 608 049          EP-A- 0 819 923**
**US-A- 3 899 253          US-A- 5 703 689**

Printed by Jouve, 75001 PARIS (FR)

**Description**

La présente invention concerne un procédé de mesure de l'absorption spectrale d'un corps placé entre une source d'émission d'un rayonnement électromagnétique et un détecteur de ce rayonnement consistant à effectuer les étapes suivantes :

- émettre ledit rayonnement électromagnétique en direction dudit corps sur un domaine spectral déterminé,
- filtrer le rayonnement électromagnétique,
- détecter le rayonnement électromagnétique atténué par l'absorption due au corps et en déduire la mesure de l'absorption spectrale de ce corps.

L'invention concerne également un dispositif pour la mise en oeuvre du procédé et s'applique tout particulièrement aux gaz.
Classiquement on mesure l'absorption spectrale d'un corps placé entre une source d'émission d'un rayonnement électromagnétique et un détecteur de ce rayonnement en:

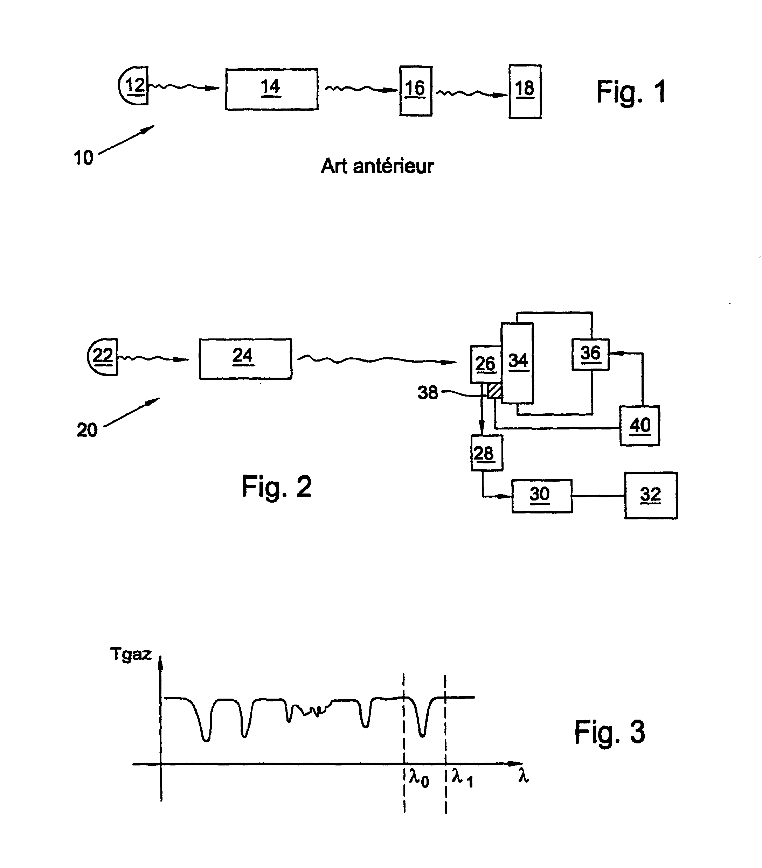

- émettant ledit rayonnement électromagnétique sur un domaine spectral déterminé au moyen d'un dispositif 10 représenté à la figure 1 et comprenant une source 12 et un corps 14 qui reçoit ce rayonnement,
- filtrant le rayonnement au moyen d'un filtre 16 par exemple de type accordable électriquement sur tout ou partie du domaine spectral considéré,
- détectant le rayonnement électromagnétique atténué par l'absorption due au corps au moyen d'un détecteur 18 et en en déduisant la mesure de l'absorption spectrale de ce corps.

Ainsi procède t'on par exemple dans le domaine de la spectroscopie appliquée à l'analyse de gaz.
Le document EP 0 608 049 illustre d'ailleurs un tel exemple.
Pour la mesure de l'absorption spectrale d'un corps tel que par exemple un gaz l'étape de filtrage met en oeuvre soit plusieurs filtres interférentiels statiques adaptés chacun à une gamme étroite de longueurs d'ondes qui, une fois réunies, couvrent tout ou partie du domaine spectral considéré soit, comme mentionné ci-dessus, un filtre accordable sur tout ou partie du domaine spectral considéré. Dans le premier cas il est nécessaire de prévoir un mécanisme tel que par exemple un barillet sur lequel sont montés les filtres pour qu'il n'y ait qu'un trajet électromagnétique ou bien de prévoir une sorte de mélangeur électromagnétique qui répartit le rayonnement électromagnétique vers les différents filtres statiques.
Avec un mélangeur électromagnétique il faut en outre qu'un détecteur soit associé à chaque filtre.
Ainsi, une telle solution est relativement compliquée à concevoir et à mettre en oeuvre et est peu économique.
Dans le second cas les éléments du dispositif sont beaucoup moins nombreux puisqu'un seul filtre est présent et qu'il n'y a qu'un seul trajet électromagnétique à considérer.
Toutefois, il n'est pas facile de trouver des filtres accordables électriquement dans le commerce pour les applications envisagées et par ailleurs la conception d'un filtre accordable électriquement n'est pas une tâche aisée.
Le document US 5,703,689 décrit un dispositif de mesure du spectre d'une radiation incidente grâce à un détecteur optique large bande qui mesure l'intensité d'une radiation incidente ayant traversée un élément optique à bande étroite. La bande de l'élément optique peut être translatée sur un intervalle de longueur d'onde déterminé par l'intermédiaire de la modification de la température. Cet élément optique sous la forme d'un film semi-conducteur joue le rôle de filtre. Le spectre de la radiation incidente est obtenu par différentiation de l'intensité mesurée par le détecteur par rapport à la température. Ainsi, l'étape de filtrage et de détection sont distinctes et mis en oeuvre par deux moyens différents, un élément optique jouant le rôle de filtre et un détecteur respectivement.
Compte tenu de ce qui précède il serait par conséquent intéressant de pouvoir mesurer l'absorption spectrale d'un corps de manière plus simple que dans l'art antérieur.
La présente invention a ainsi pour objet un procédé de mesure de l'absorption spectrale d'un corps placé entre une source d'émission d'un rayonnement électromagnétique et un détecteur de ce rayonnement consistant à effectuer les étapes suivantes :

- émettre ledit rayonnement électromagnétique en direction dudit corps sur un domaine spectral déterminé,
- filtrer le rayonnement électromagnétique,
- détecter le rayonnement électromagnétique atténué par l'absorption due au corps et en déduire la mesure de l'absorption spectrale de ce corps, caractérisé en ce que les étapes de filtrage et de détection sont réalisées par un détecteur de type quantique.

Ainsi, il n'est plus nécessaire d'utiliser de filtre pour l'étape de filtrage puisque le détecteur quantique lui même réalise cette fonction ce qui simplifie la technique de la mesure.

Plus précisément, le détecteur quantique présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique. Le procédé consiste alors à utiliser le front d'absorption de la sensibilité spectrale du détecteur quantique pour en déduire la mesure de l'absorption spectrale du corps.

Selon l'invention, le procédé consiste à effectuer les étapes suivantes :

- déplacer le front d'absorption de la sensibilité spectrale du détecteur quantique d'une position correspondant à une longueur d'onde $\lambda_0$ vers une position correspondant à une longueur d'onde $\lambda_1$ qui sont toutes deux incluses dans le domaine spectral du rayonnement électromagnétique émis et
- combiner les signaux fournis par le détecteur quantique pour chacune des positions du front d'absorption correspondant aux longueurs d'onde $\lambda_0$ et $\lambda_1$ et en déduire la mesure de l'absorption spectrale du corps dans la gamme de longueurs d'onde comprises entre $\lambda_0$ et $\lambda_1$.

La combinaison de signaux s'entend de toute opération mathématique mettant en relation entre eux les signaux de manière à pouvoir en déduire la mesure de l'absorption spectrale du corps.

Par exemple, le procédé consiste à former la différence des signaux fournis par le détecteur quantique pour chacune des positions du front d'absorption correspondant aux longueurs d'onde $\lambda_0$ et $\lambda_1$ ou bien à former le rapport des signaux fournis par le détecteur quantique pour chacune des positions du front d'absorption correspondant aux longueurs d'onde $\lambda_0$ et $\lambda_1$.

Le déplacement du front d'absorption de la sensibilité spectrale du détecteur quantique est obtenu en faisant varier un paramètre physique dont dépend la position dudit front d'absorption.

L'invention trouve une application particulièrement intéressante lorsque le corps est un gaz.

Dans le domaine plus particulier de la spectroscopie appliquée à l'analyse de gaz l'invention a également pour objet un procédé de détermination du pouvoir calorifique d'un gaz constitué de constituants combustibles, caractérisé en ce qu'il consiste à effectuer les étapes suivantes :

- émettre ledit rayonnement électromagnétique à travers ledit gaz sur un domaine spectral déterminé dans lequel le gaz présente de l'absorption,
- détecter le rayonnement électromagnétique atténué par l'absorption due aux constituants combustibles au moyen d'un détecteur quantique qui présente une sensibilité spectrale ayant un front d'absorption correspondant à l'énergie de transition dudit détecteur, en déplaçant successivement ledit front d'absorption du détecteur sur des positions correspondant à des longueurs d'onde successives $\lambda_0,...,\lambda_n$, incluses dans le domaine spectral, ledit détecteur fournissant un signal $S(\lambda_i)$ correspondant à l'énergie électromagnétique reçue par le détecteur quantique pour chacune des positions du front d'absorption sur une longueur d'onde $\lambda_i$,
- combiner les signaux successifs fournis par le détecteur quantique $S(\lambda_i)$, i =0,...,n, de manière à isoler l'absorption spectrale des constituants combustibles sur chaque gamme de longueurs d'onde $(\lambda_i;\lambda_{i+1})$,
- comparer les combinaisons de signaux précédemment obtenues à des combinaisons de signaux obtenues préalablement lors d'une étape d'étalonnage sur un gaz de référence de composition connue et en déduire la valeur du pouvoir calorifique du gaz.

Par exemple, le procédé consiste à former la différence des signaux fournis par le détecteur quantique pour chacune des positions du front d'absorption correspondant aux longueurs d'onde successives $\lambda_0,...,\lambda_n$ pris deux à deux consécutivement $S(\lambda_{i+1})-S(\lambda_i)$ ou bien à former le rapport des signaux fournis par le détecteur quantique pour chacune des positions du front d'absorption correspondant aux longueurs d'onde successives $\lambda_0,...,\lambda_n$ $S(\lambda_{i+1})/S(\lambda_i)$.

Selon une caractéristique de l'invention, le procédé consiste à déplacer le front d'absorption de la sensibilité spectrale du détecteur quantique en faisant varier un paramètre physique dont dépend la position dudit front d'absorption.

L'invention trouve également une application intéressante dans le domaine de la mesure de l'énergie d'un rayonnement électromagnétique où il peut, par exemple être utile de caractériser le spectre d'émission d'une source électromagnétique.

L'invention a donc également pour objet un procédé de mesure de l'énergie d'un rayonnement électromagnétique consistant à effectuer les étapes suivantes :

- émettre ledit rayonnement électromagnétique sur un domaine spectral déterminé,
- filtrer le rayonnement électromagnétique,
- détecter le rayonnement électromagnétique et en déduire la mesure de l'énergie de ce rayonnement électromagnétique, caractérisé en ce que les étapes de filtrage et de détection sont réalisées par un détecteur de type quantique.

Plus précisément, le détecteur quantique présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique. Le procédé consiste alors à utiliser le front d'absorption de la sensibilité spectrale du détecteur quantique pour en déduire la mesure de l'énergie de ce rayonnement électromagnétique

Selon une caractéristique, le procédé consiste à effectuer les étapes suivantes :

- déplacer le front d'absorption de la sensibilité spectrale du détecteur quantique d'une position correspondant à une longueur d'onde $\lambda_0$ vers une position correspondant à une longueur d'onde $\lambda_1$ qui sont toutes deux incluses dans le domaine spectral du rayonnement électromagnétique émis et,
- combiner les signaux fournis par le détecteur quantique pour chacune des positions du front d'absorption correspondant aux longueurs d'onde $\lambda_0$ et $\lambda_1$ et en déduire la mesure de l'énergie du rayonnement électromagnétique dans la gamme de longueurs d'onde comprises entre $\lambda_0$ et $\lambda_1$.

Ainsi, en déplaçant le front d'absorption de la sensibilité spectrale du détecteur sur tout le domaine spectral considéré il est possible de reconstituer le spectre d'émission de la source par intervalles $(\lambda_i;\lambda_{i+1})$.

Le procédé consiste à former la différence des signaux fournis par le détecteur quantique pour chacune des positions du front d'absorption correspondant aux longueurs d'onde $\lambda_0$ et $\lambda_1$ ou bien à former le rapport des signaux fournis par le détecteur quantique pour chacune des positions du front d'absorption correspondant aux longueurs d'onde $\lambda_0$ et $\lambda_1$.

Selon une caractéristique de l'invention, le déplacement du front d'absorption de la sensibilité spectrale du détecteur quantique est obtenu en faisant varier un paramètre physique dont dépend la position dudit front d'absorption. L'invention concerne également un dispositif de mesure de l'absorption spectrale d'un corps vis-à-vis d'un rayonnement électromagnétique pour la mise en oeuvre du procédé correspondant mentionné ci-dessus et qui comprend :

- au moins une source d'émission dudit rayonnement électromagnétique sur un domaine spectral déterminé en direction dudit corps,
- des moyens de filtrage dudit rayonnement électromagnétique,
- des moyens de détection dudit rayonnement électromagnétique fournissant un signal électrique représentatif de la mesure de l'absorption spectrale de ce corps, caractérisé en ce que les moyens de filtrage et les moyens de détection sont confondus et sont constitués par un détecteur de type quantique.

Avantageusement, un tel dispositif est particulièrement simple comparé à ceux de l'art antérieur puisqu'il permet de supprimer les filtres interférentiels statiques et le filtre accordable électriquement.

Plus précisément, le détecteur quantique présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique, ledit dispositif comprenant en outre :

- des moyens de déplacement du front d'absorption de la sensibilité spectrale du détecteur quantique d'une position correspondant à une longueur d'onde $\lambda_0$ vers une position correspondant à une longueur d'onde $\lambda_1$ qui sont toutes deux incluses dans le domaine spectral du rayonnement électromagnétique émis et,
- des moyens de combinaison des signaux fournis par le détecteur quantique pour chacune des positions du front d'absorption correspondant aux longueurs d'onde $\lambda_0$ et $\lambda_1$ et de déduction de la mesure de l'absorption spectrale de ce corps dans la gamme de longueurs d'onde comprises entre $\lambda_0$ et $\lambda_1$.

Les moyens de déplacement du front d'absorption sont par exemple constitués de moyens pour faire varier un paramètre physique dont dépend la position dudit front d'absorption.

Par exemple, le paramètre physique est la température et les moyens pour faire varier la température du détecteur quantique comprennent un élément alimenté par une source de courant variable et utilisant des jonctions à effet Peltier avec lequel ledit détecteur quantique est maintenu en contact thermique ainsi qu'un élément thermométrique associé audit détecteur quantique.

Les moyens de combinaison des signaux fournis par le détecteur quantique pour chacune des positions du front d'absorption correspondant aux longueurs d'onde $\lambda_0$ et $\lambda_1$ peuvent être constitués de moyens pour former la différence de ces signaux ou bien de moyens pour former le rapport de ces signaux.

Le corps est par exemple un gaz.

L'invention a également pour objet un dispositif de détermination du pouvoir calorifique d'un gaz constitué de constituants combustibles pour la mise en oeuvre du procédé correspondant énoncé plus haut et qui est caractérisé en ce qu'il comprend :

- au moins une source d'émission dudit rayonnement électromagnétique à travers le gaz sur un domaine spectral déterminé dans lequel le gaz présente de l'absorption,
- des moyens de détection dudit rayonnement électromagnétique atténué par l'absorption due aux constituants combustibles, lesdits moyens étant constitués d'un détecteur quantique qui présente une sensibilité spectrale ayant un front d'absorption correspondant à l'énergie de transition dudit détecteur,
- des moyens de déplacement dudit front d'absorption de la sensibilité spectrale du détecteur sur des positions correspondant à des longueurs d'onde successives $\lambda_0,...,\lambda_n$, incluses dans le domaine spectral déterminé, ledit détecteur fournissant un signal $Si(\lambda i)$ correspondant à l'énergie électromagnétique reçue par le détecteur quantique pour chacune des positions du front d'absorption sur une longueur d'onde $\lambda_i$,
- des moyens de combinaison des signaux successifs fournis par le détecteur quantique $S(\lambda_i)$, $i = 0,...,n$, de manière à isoler l'absorption spectrale des constituants combustibles sur chaque gamme de longueurs d'onde $(\lambda_i;\lambda_{i+1})$,
- des moyens, d'une part, de comparaison des combinaisons de signaux précédemment obtenues à des combinaisons de signaux obtenues préalablement lors d'une étape d'étalonnage sur un gaz de référence de composition connue et, d'autre part, de déduction de la valeur du pouvoir calorifique du gaz.

Les moyens de déplacement du front d'absorption sont par exemple constitués de moyens pour faire varier un paramètre physique dont dépend la position dudit front d'absorption.

Le paramètre physique est par exemple la température et les moyens pour faire varier la température du détecteur quantique comprennent un élément alimenté par une source de courant variable et utilisant des jonctions à effet Peltier avec lequel ledit détecteur quantique est maintenu en contact thermique ainsi qu'un élément thermométrique associé audit détecteur quantique.

Les moyens de combinaison des signaux fournis par le détecteur quantique pour chacune des positions du front d'absorption correspondant aux longueurs d'onde successives $\lambda_0,...,\lambda_n$ peuvent être constitués de moyens pour former la différence de ces signaux pris deux à deux consécutivement $S(\lambda_{i+1})-Si(\lambda_i)$ ou bien de moyens pour former le rapport de ces signaux pris deux à deux consécutivement $S(\lambda_{i+1})/S(\lambda_i)$.

L'invention a aussi pour objet un dispositif de mesure de l'énergie d'un rayonnement électromagnétique pour la mise en oeuvre du procédé correspondant mentionné ci-dessus et qui comprend:

- au moins une source d'émission dudit rayonnement électromagnétique sur un domaine spectral déterminé,
- des moyens de filtrage dudit rayonnement électromagnétique,
- des moyens de détection dudit rayonnement électromagnétique fournissant un signal électrique représentatif de la mesure de l'énergie de ce rayonnement électromagnétique, caractérisé en ce que les moyens de filtrage et les moyens de détection sont confondus et sont constitués par un détecteur de type quantique.

Plus précisément, le détecteur quantique présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique, ledit dispositif comprenant en outre :

- des moyens de déplacement du front d'absorption de la sensibilité spectrale du détecteur quantique d'une position correspondant à une longueur d'onde $\lambda_0$ vers une position correspondant à une longueur d'onde $\lambda_1$ qui sont toutes deux incluses dans le domaine spectral du rayonnement électromagnétique émis et,
- des moyens pour combiner des signaux fournis par le détecteur quantique pour chacune des positions du front d'absorption correspondant aux longueurs d'onde $\lambda 0$ et $\lambda_1$ et pour en déduire la mesure de l'énergie dudit rayonnement électromagnétique dans la gamme de longueurs d'onde comprises entre $\lambda_0$ et $\lambda_1$.

Les moyens de déplacement du front d'absorption sont par exemple constitués de moyens pour faire varier un paramètre physique dont dépend la position dudit front d'absorption.

Le paramètre physique est par exemple la température et les moyens pour faire varier la température du détecteur quantique comprennent un élément alimenté par une source de courant variable et utilisant des jonctions à effet Peltier avec lequel ledit détecteur quantique est maintenu en contact thermique ainsi qu'un élément thermométrique associé audit détecteur quantique.

D'autres caractéristiques et avantages apparaîtront au cours de la description qui va suivre donnée uniquement à titre d'exemple et faite en référence aux dessins annexés sur lesquels :

- la figure 1 représente schématiquement un dispositif de l'art antérieur,

- la figure 2 représente schématiquement un dispositif de mesure de l'absorption spectrale d'un gaz selon l'invention,
- la figure 3 représente l'allure de la transmission spectrale d'un gaz,
- la figure 4 représente la courbe de sensibilité spectrale d'un détecteur quantique pour deux positions différentes du front d'absorption,
- la figure 5 représente l'allure de la transmission spectrale d'un filtre accordable centré sur la longueur d'onde $(\lambda_1 + \lambda_0)/2$
- la figure 6 représente la courbe de sensibilité spectrale d'un détecteur quantique et celle de sa dérivée par rapport à la longueur d'onde,
- la figure 7 représente les courbes A et B de sensibilité spectrale des détecteurs quantiques portant respectivement les références G6890 et G6893 et qui sont commercialisées par la société HAMMAMATSU,
- la figure 8 représente la courbe de sensibilité spectrale d'un détecteur quantique pour plusieurs positions différentes du front d'absorption,
- la figure 9 représente schématiquement un dispositif de mesure de l'énergie d'un rayonnement électromagnétique selon l'invention.

Un dispositif de mesure de l'absorption spectrale d'un corps tel que par exemple un gaz est représenté schématiquement à la figure 2 et est désigné par la référence générale notée 20.

Ce dispositif comprend une source 22 émettant un rayonnement électromagnétique, préférentiellement un rayonnement situé dans l'infra-rouge, en direction du gaz qui est contenu dans une cellule 24.

Toutefois, un rayonnement situé dans le visible ou dans l'ultraviolet ou bien dans le domaine des hyperfréquences ou encore dans le domaine des rayons X pourrait également convenir.

La source de rayonnement infrarouge 22 est par exemple une source thermique à large bande constituée d'une lampe à filament de tungstène et qui est stable spectralement pendant le temps nécessaire à la mesure.

Il s'agit par exemple d'une micro-lampe ROYAL commercialisée par la société HAMAI.

La source émet un rayonnement sur un domaine spectral dont les longueurs d'onde sont comprises entre 0,4 et 4,2μm.

Le dispositif comprend également des moyens de filtrage et de détection du rayonnement qui est partiellement absorbé par le gaz de la cellule 24 et qui sont constitués d'un détecteur de type quantique 26.

Le détecteur quantique 26 reçoit l'énergie contenue dans le rayonnement infra-rouge et la transforme en un signal électrique analogique représentatif de ce rayonnement et qui est ensuite transformé en signal numérique par un convertisseur A/D 28, puis injecté dans un microprocesseur 30.

Le microprocesseur stocke les données provenant du détecteur dans une mémoire 32 de type ROM.

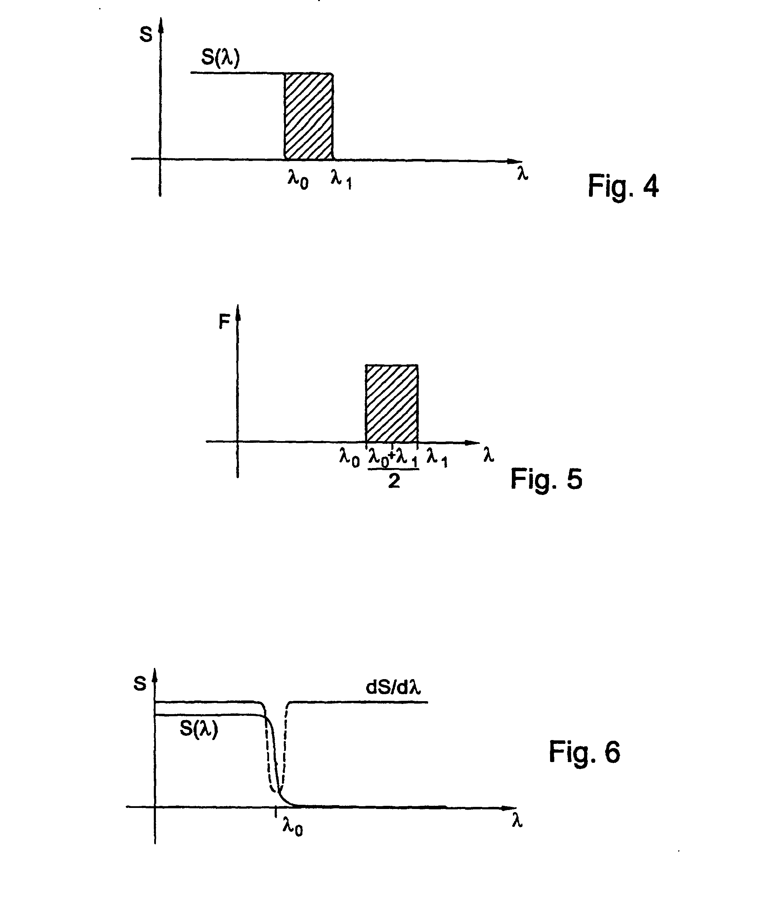

Un tel détecteur quantique possède une réponse ou sensibilité variable spectralement qui, dans le sens des longueurs d'onde croissantes, apparaît sous la forme d'un flanc abrupt au voisinage d'une longueur d'onde particulière $\lambda_0$ (Fig.4).

Ce flanc abrupt sera appelé front d'absorption dans la suite de l'exposé.

La longueur d'onde $\lambda_0$ a une valeur reliée à l'énergie de transition E ("bandgap" en terminologie anglosaxonne) des électrons du matériau constituant le détecteur depuis une orbitale correspondant à une énergie située dans la bande de valence dudit matériau jusqu'à une orbitale située dans sa bande de conduction. La relation entre E et $\lambda$ fait intervenir la vitesse de la lumière c et la constante de Planck h et s'écrit $E=hc/\lambda$.

Au voisinage de cette énergie de transition E l'absorption du matériau et donc sa sensibilité spectrale sont rapidement variables avec la longueur d'onde $\lambda_0$ et sont fortement sensibles à la température.

Il s'ensuit qu'une mesure d'absorption spectrale faisant intervenir un détecteur quantique pour un domaine spectral voisin de sa transition est fortement instable avec la température et la longueur d'onde.

Par conséquent, on évite donc d'utiliser un détecteur quantique dans un tel domaine pour des mesures d'absorption spectrale précises.

Les détecteurs quantiques sont, au contraire, plutôt utilisés dans la zone où leur sensibilité spectrale est essentiellement plate et où leur rendement est très peu variable en fonction de paramètres physiques tels que la température, la pression ou le champ électrique.

A l'encontre de ce préjugé, la présente invention prévoit justement d'utiliser le front d'absorption de la sensibilité spectrale du détecteur quantique pour en déduire la mesure de l'absorption ou de la transmission spectrale du gaz à proximité de la longueur d'onde correspondant à l'énergie de transition du détecteur.

La figure 3 représente l'allure de la transmission spectrale d'un gaz qui fait apparaître un creux correspondant à l'absorption spectrale par le gaz entre les longueurs d'onde $\lambda_0$ et $\lambda_1$ qui sont toutes deux incluses dans le domaine spectral émis par la source et la figure 4 illustre la manière dont est utilisé le front d'absorption du détecteur pour isoler cette absorption dans la gamme de longueurs d'onde considérées.

Par convention, on conviendra que la longueur d'onde correspondant à l'énergie de transition du détecteur est celle obtenue pour la valeur de la sensibilité spectrale située à mi-hauteur de la courbe.

Comme représenté à la figure 4, le front d'absorption de la sensibilité spectrale du détecteur quantique est utilisé dans deux positions qui correspondent toutes deux aux longueurs d'onde $\lambda_0$ et $\lambda_1$ définies ci-dessus.

Le microprocesseur 30 forme la différence des signaux $S(\lambda_0)$ et $S(\lambda_1)$ fournis par le détecteur quantique 26 pour chacune des deux positions du front d'absorption et la différence obtenue $S(\lambda_1) - S(\lambda_0)$ qui est indiquée en traits hachurés sur la figure 4 correspond à l'énergie du rayonnement infra-rouge reçue par le détecteur entre les longueurs d'onde $\lambda_0$ et $\lambda_1$, cette énergie étant représentative de l'absorption ou de la transmission spectrale du gaz sur cette gamme de longueurs d'onde.

Ainsi, il est possible de considérer cette manière d'isoler une partie du domaine spectral située entre deux longueurs d'onde comme correspondant à une étape de filtrage réalisée par un filtre accordable.

En effet, si l'on écrit les signaux $S(\lambda_0)$ et $S(\lambda_1)$ sous la forme suivante :

$$S(\lambda_0) = \int_\lambda E(\lambda)\ \theta gaz\ (\lambda)\ Sd(\lambda-\lambda_0)\ d\lambda,$$

$$S(\lambda_1) = \int_\lambda E(\lambda)\ \theta gaz\ (\lambda)\ Sd(\lambda-\lambda_1)\ d\lambda,$$

où $E(\lambda)$ désigne l'intensité lumineuse émise par la source 22,

$\theta gaz\ (\lambda) = \exp(-L\alpha\ (\lambda))$ désigne la réponse spectrale due au gaz pour la longueur d'onde $\lambda$,

L désigne la longueur du trajet optique dans le gaz,

$\alpha$ désigne le coefficient d'absorption optique du gaz et,

Sd représente la réponse spectrale du détecteur,

alors la différence $S(\lambda_1)-S(\lambda_0)$ s'écrit :

$$S(\lambda_1)\ -S(\lambda_0) = \int_\lambda E(\lambda)\ \theta gaz\ [Sd(\lambda-\lambda_1)-Sd(\lambda-\lambda_0)]d\lambda,$$

$$\text{soit } \int_\lambda E(\lambda)\ \theta gaz\ (\lambda)\ F((\lambda_1+\lambda_0)/2)\ d\lambda$$

où $F((\lambda_1+\lambda_0)/2)$ désigne la transmission spectrale d'un filtre optique accordable centré sur la longueur d'onde $(\lambda_1+\lambda_0)/2$ comme représenté à la figure 5.

Pour faire apparaître la contribution du gaz entre les longueurs d'onde $\lambda_0$ et $\lambda_1$ (Fig.4) il est également possible de former le rapport $S(\lambda_1)/S(\lambda_0)$ ou, de manière plus générale, de combiner ces deux signaux au moyen d'une relation mathématique.

La position en $\lambda$ du front d'absorption de la sensibilité spectrale du détecteur quantique dépend de paramètres physiques tels que par exemple la température, la pression , le champ électrique, le champ magnétique.

La position du front d'absorption correspondant à la longueur d'onde $\lambda_1$ (Fig.4) est obtenue par déplacement de ce front à partir de la position correspondant à la longueur d'onde $\lambda_0$.

Le déplacement est obtenu en faisant varier l'un des paramètres physiques énoncés ci-dessus, par exemple la température du détecteur.

Pour ce faire on utilise le montage représenté à la figure 2 qui permet de faire varier la température absolue du détecteur quantique 26.

Le détecteur est par exemple une photodiode commercialisée par la société HAMMAMATSU sous la référence G6890 et qui est sensible dans la gamme de 1,1 à 1,6 microns.

Le détecteur est monté sur un élément 34 alimenté par une source de courant électrique 36 et utilisant des jonctions à effet Peltier.

Le détecteur est maintenu en contact thermique avec cet élément 34 et un élément thermométrique 38 tel que par exemple une thermistance est associée audit détecteur.

Un contrôleur 40 mesure la résistance fournie par la thermistance 38, en déduit la température absolue du détecteur et commande l'injection d'une valeur de courant électrique appropriée dans l'élément 34 pour que ledit détecteur atteigne la température T souhaitée pour laquelle le font d'absorption sera accordé sur une longueur d'onde particulière.

Pour ce faire, il convient de noter que la relation $\lambda(T)$ du matériau constituant le détecteur quantique doit être connue par une étape d'étalonnage préalable.

Il est ainsi possible par exemple d'isoler la contribution du gaz méthane entre les longueurs d'onde 1,60 et 1,66µm en faisant varier la température absolue de -20 à +25°C.

Il est également possible par exemple d'isoler la contribution de la vapeur d'eau entre les longueurs d'onde 2,6 et 2,7μm en faisant varier la température dans la même plage que précédemment avec un détecteur quantique commercialisé par la société HAMMAMATSU sous la référence G6893.

Un tel dispositif peut être utilisé pour l'analyse spectrale de gaz et peut servir de capteur de gaz, par exemple de méthane, de dioxyde de carbone ou de vapeur d'eau.

Toutefois, le dispositif selon l'invention peut également servir à mesurer l'absorption spectrale de corps tels que par exemple l'eau et des hydrocarbures liquides.

On remarquera que la dérivée par rapport à la longueur d'onde λ de la sensibilité spectrale S du détecteur (représentée à la figure 6) correspond à la transmission spectrale d'un filtre optique du type à encoche.

On comprend alors qu'en effectuant la dérivée par rapport à λ de la sensibilité spectrale du détecteur ou en déplaçant le front d'absorption de la sensibilité spectrale du détecteur cela revient à réaliser la fonction exercée par un filtre optique accordable.

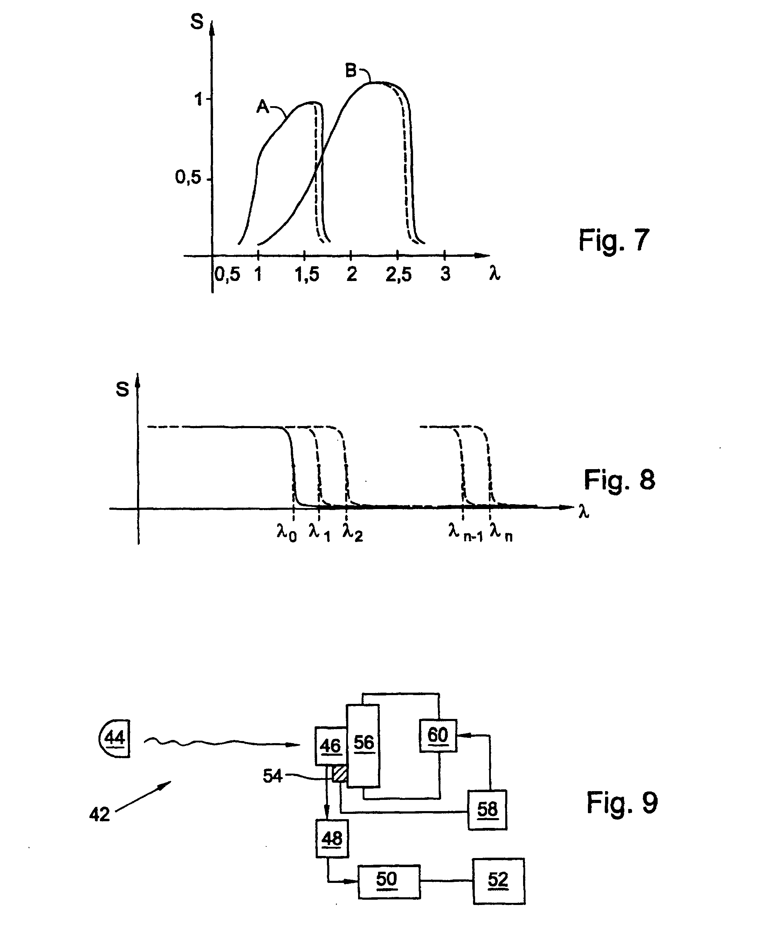

En effet, lorsque $\lambda_1 = \lambda_0 + \Delta\lambda$, ce qui correspond à un faible déplacement en longueur d'onde $\Delta\lambda$, le fait de former la différence $S(\lambda + \Delta\lambda) - S(\lambda_0)$ revient en quelque sorte à effectuer la dérivée du signal S au voisinage de $\lambda_0$, au terme $\Delta\lambda$ près. La figure 7 représente les courbes de sensibilité A et B en longueurs d'onde des détecteurs portant respectivement les références G6890 et G6893 évoquées plus haut.

Les parties en pointillés et en traits plein du front d'absorption sont respectivement obtenues pour les températures de -20 et +25°C.

Selon une deuxième application, il est intéressant d'utiliser le dispositif de l'invention pour déterminer le pouvoir calorifique du gaz naturel qui est constitué de constituants combustibles.

Pour ce faire, on conserve le dispositif représenté à la figure 2 dans lequel la cellule 24 est remplie de gaz naturel et l'on fait varier un paramètre physique dont dépend la position du front d'absorption du détecteur quantique 26, par exemple la température absolue de ce détecteur, sur une gamme de températures permettant ainsi au front d'absorption de se déplacer sur les longueurs d'onde $\lambda_0$, $\lambda_1$, $\lambda_2$,..., $\lambda_{n-1}$, $\lambda_n$ (Fig.8).

Pour chacune des positions du front d'absorption correspondant à une longueur d'onde $\lambda_i$ le détecteur fournit un signal $S(\lambda_i)$ qui est stocké dans la mémoire 32 et le microprocesseur 30 forme ensuite la différence des signaux consécutifs $S(\lambda_{i+1})-S(\lambda_i)$, pour i=0,...,n, ou bien le rapport des signaux $S(\lambda_{i+1})/S(\lambda_i)$ ou encore une combinaison mathématique reliant ces signaux afin d'isoler la contribution gazeuse dans chacun des intervalles $(\lambda_i; \lambda_{i+1})$ et d'en déduire une valeur de l'absorption ou de la transmission spectrale gazeuse dans cet intervalle.

Par comparaison des signaux $S(\lambda_{i+1}) - S(\lambda_i)$ avec les signaux de référence $(S(\lambda_{i+1})-S(\lambda_i))$ref obtenus préalablement lors d'une étape d'étalonnage réalisée avec un gaz de référence de composition connue on en déduit la valeur du pouvoir calorifique du gaz naturel considéré.

A titre d'exemple, le gaz naturel possède la composition suivante :

| Méthane | 89,5 % |
|---|---|
| Ethane | 5 % |
| Propane | 1 % |
| Butane | 0,6 % |
| Pentane | 0,3 % |
| Gaz neutres | 3,6 % |

Plusieurs longueurs d'onde $\lambda_0$ à $\lambda_5$ (n = 5) vont être utilisées pour déterminer la contribution des différents constituants du gaz naturel cités ci-dessus à l'exception des gaz neutres qui n'apportent aucune contribution au pouvoir calorifique.

Ces longueurs d'onde sont telles qu'à chacune d'elles correspond la contribution de plusieurs constituants combustibles.

En appliquant différentes valeurs de température au détecteur par l'intermédiaire du montage représenté à la figure 2, le front d'absorption de la sensibilité spectrale dudit détecteur s'accorde sur les longueurs d'ondes respectives $\lambda_0$ à $\lambda_5$.

Le détecteur quantique 26 fournit pour chaque position λ (T) un signal électrique correspondant à S (λ) :

$$S(\lambda_0) = \int_{\lambda} E(\lambda)\,\theta gaz(\lambda, xi)\,Sd(\lambda-\lambda_0)\,d\lambda$$

où E ($\lambda$) désigne l'intensité lumineuse émise par la source 22,

$$\theta_{gaz}(\lambda, x_i) = exp\left(-L \times \sum_i \alpha_i(\lambda) \times x_i\right)$$

désigne la réponse spectrale due à tous les constituants combustibles gazeux présents à cette longueur d'onde, L désignant la longueur du trajet optique dans le gaz,

$x_i$ représentant le nombre de moles du constituant combustible i par unité de volume à la pression P et à la température T,

$\alpha_i$ désignant le coefficient d'absorption du constituant combustible i, et dépendant de la longueur d'onde, de la pression et de la température,

et Sd représentant la réponse spectrale du détecteur.

En formant la différence S ($\lambda_{i+1}$) - S ($\lambda_i$) pour les couples consécutifs de longueurs d'onde $\lambda_0$, $\lambda_1$, ....., $\lambda_5$ on obtient cinq valeurs pour lesquelles l'absorbance A se définit comme suit : A ($\lambda_i$ ; $\lambda_{i+1}$) = Ln ( 1 / (S ($\lambda_{i+1}$) - S ($\lambda_i$)) où Ln désigne la fonction logarithme népérien et l'on obtient le système suivant de cinq équations :

$$A_1 = a_{11}x_1 + a_{21}x_2 + .... + a_{51}x_5$$

$$A_2 = a_{12}x_1 + a_{22}x_2 + ..... + a_{52}x_5$$

$$.........................................$$

$$A_5 = a_{15}x_1 + a_{25}x_2 + ..... + a_{55}x_5$$

où les termes aij dépendent du constituant i et du dispositif 20.

Avant de mettre en oeuvre l'invention sur un gaz naturel de composition non connue on procède à une étape d'étalonnage préalable en laboratoire en injectant dans le dispositif 20 plusieurs gaz avec des constituants de nombres de moles par unité de volume xi connues à T et P données.

L'étape d'étalonnage est habituellement réalisée au moyen d'un spectromètre à transformée de Fourier.

Pour un mélange de constituants combustibles connus on obtient, en accordant le front d'absorption de la sensibilité spectrale du détecteur quantique 26 sur les longueurs d'onde $\lambda_0, \lambda_1, ....., \lambda_5$, un système de cinq équations :

$$A_{11} = a_{11}x_1 + ... + a_{51}x_5$$

$$.....$$

$$A_{51} = a_{15}x_1 + ... + a_{55}x_5$$

où les $x_i$ (i = 1, ..., 5) sont connues et où les termes $a_{ij}$ sont les inconnues.

En injectant dans l'appareil 10 quatre autres mélanges de gaz connus on obtient ainsi vingt équations supplémentaires avec les mêmes termes $a_{ij}$ que précédemment.

Ceci permet alors de calculer par une méthode mathématique connue, telle que par exemple une méthode de résolution d'équations linéaires, les coefficients $a_{ij}$ qui sont définis comme suit :

$$[A_j] = [a_{ij}] [x_i]$$
$$k = 1, ..., 5 \qquad k = 1, ..., 5$$

où les indices k identifient le mélange de gaz connu concerné.

En inversant par une méthode mathématique d'inversion classique la matrice [ $a_{ij}$], on se ramène à un système d'équations

$$[\, x_i \,] = [\, a_{ij} \,]^{-1}\, [\, A_j \,] \quad = \quad [\, b_{ij} \,]\,[\, A_j \,]$$

$$x = 1, \ldots, 5 \quad i = 1, \ldots, 5 \quad i = 1, \ldots, 5 \qquad i = 1, \ldots, 5 \quad i = 1, \ldots, 5$$

$$j = 1, \ldots, 5 \qquad\qquad j = 1, \ldots, 5$$

Ainsi, les valeurs $x_i$ s'écrivent

$$x_i = \sum_{j=1,\ldots,5} b_{ij} \times A_j \, x_i = \sum b_{ij}\, A_j,$$

Il suffit de mémoriser dans la mémoire 32 les données $b_{ij}$ calculées lors de l'étalonnage, et lorsque l'on a affaire à un gaz naturel de composition et donc de pouvoir calorifique non connus, les différentes valeurs Aj sont mesurées pour différents intervalles $[\, \lambda_i \,;\, \lambda_{i+1} \,]$ obtenus comme décrit précédemment et les termes $x_i$ s'en déduisent facilement.

Le pouvoir calorifique H (P,T) du gaz s'écrit

$$\sum_{i=1,\ldots,5} x_i \times H_i$$

où $H_i$ représente le pouvoir calorifique du constituant i en Joules par mole.

Par conséquent, dès que les termes xi sont déterminés, le pouvoir calorifique H (P,T) est obtenu directement.

Selon une autre application particulièrement intéressante, la figure 9 représente schématiquement un dispositif 42 de mesure de l'énergie d'un rayonnement électromagnétique émis par une source 44 sur un domaine spectral déterminé et reçu par un détecteur quantique 46.

De manière identique à ce qui a été décrit ci-dessus en relation avec la figure 2, le signal électrique fourni par le détecteur est converti en signal numérique par le convertisseur 48 et traité par le microprocesseur 50, une mémoire 52 de type ROM servant à stocker les données provenant du détecteur et du microprocesseur.

Le montage constitué d'une thermistance 54 associée au détecteur 46, de l'élément 56 muni de jonctions à effet Peltier, du contrôleur 58 et de la source de courant 60 est identique structurellement et fonctionnellement à celui de la figure 2.

Ainsi, en déplaçant le front d'absorption de la sensibilité spectrale du détecteur sur tout le domaine spectral de la source 44 il est possible de reconstituer son spectre d'émission par intervalles de longueurs d'onde $(\lambda_i ; \lambda_{i+1})$.

**Revendications**

1. Procédé de mesure de l'absorption spectrale d'un corps (24) placé entre une source (22) d'émission d'un rayonnement électromagnétique et un détecteur (26) de ce rayonnement consistant à effectuer les étapes suivantes :

   - émettre ledit rayonnement électromagnétique en direction dudit corps sur un domaine spectral déterminé,
   - filtrer le rayonnement électromagnétique,
   - détecter le rayonnement électromagnétique atténué par l'absorption due au corps (24) et en déduire la mesure de l'absorption spectrale de ce corps,

   **caractérisé en ce que** les étapes de filtrage et de détection sont confondues et réalisées par un détecteur de type quantique (26), qui présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique, ledit procédé consistant à utiliser le front d'absorption de la sensibilité spectrale du détecteur quantique pour en déduire la mesure de l'absorption spectrale du corps (24).

2. Procédé selon la revendication 1, selon lequel ledit procédé consiste à effectuer les étapes suivantes :

   - déplacer le front d'absorption de la sensibilité spectrale du détecteur quantique (26) d'une position correspondant à une longueur d'onde $\lambda_0$ vers une position correspondant à une longueur d'onde $\lambda_1$ qui sont toutes deux incluses dans le domaine spectral du rayonnement électromagnétique émis et

- combiner les signaux fournis par le détecteur quantique pour chacune des positions du front d'absorption correspondant aux longueurs d'onde $\lambda_0$, et $\lambda_1$ et en déduire la mesure de l'absorption spectrale du corps (24) dans la gamme de longueurs d'onde comprises entre $\lambda_0$ et $\lambda_1$.

3. Procédé selon la revendication 2, selon lequel ledit procédé consiste à former la différence des signaux fournis par le détecteur quantique pour chacune des positions du front d'absorption correspondant aux longueurs d'onde $\lambda_0$ et $\lambda_1$.

4. Procédé selon la revendication 2, selon lequel ledit procédé consiste à former le rapport des signaux fournis par le détecteur quantique (26) pour chacune des positions du front d'absorption correspondant aux longueurs d'onde $\lambda_0$ et $\lambda_1$.

5. Procédé selon l'une des revendications 2 à 4, consistant à déplacer le front d'absorption de la sensibilité spectrale du détecteur quantique (26) en faisant varier un paramètre physique dont dépend la position dudit front d'absorption.

6. Application du procédé selon l'une des revendications 1 à 5, dans laquelle le corps est un gaz.

7. Procédé de détermination du pouvoir calorifique d'un gaz constitué de constituants combustibles, consistant à effectuer les étapes suivantes :

- émettre ledit rayonnement électromagnétique à travers ledit gaz sur un domaine spectral déterminé dans lequel le gaz présente de l'absorption,
- filtrer le rayonnement électromagnétique,
- détecter le rayonnement électromagnétique atténué par l'absorption due aux constituants combustibles,

**caractérisé en ce que** les étapes de filtrage et de détection sont confondues et réalisées par un détecteur de type quantique (26), qui présente une sensibilité spectrale ayant un front d'absorption correspondant à l'énergie de transition dudit détecteur, en déplaçant successivement ledit front d'absorption du détecteur sur des positions correspondant à des longueurs d'onde successives $\lambda_0,..., \lambda_n$, incluses dans le domaine spectral, ledit détecteur fournissant un signal $S(\lambda_i)$ correspondant à l'énergie électromagnétique reçue par le détecteur quantique (26) pour chacune des positions du front d'absorption sur une longueur d'onde $\lambda_i$, ledit procédé consistant en outre à :

- combiner les signaux successifs fournis par le détecteur quantique $S(\lambda_i)$, i =0,...,n, de manière à isoler l'absorption spectrale des constituants combustibles sur chaque gamme de longueurs d'onde $(\lambda_i; \lambda_{i+1})$,
- comparer les combinaisons de signaux précédemment obtenues à des combinaisons de signaux obtenues préalablement lors d'une étape d'étalonnage sur un gaz de référence de composition connue et en déduire la valeur du pouvoir calorifique du gaz.

8. Procédé selon la revendication 7, selon lequel ledit procédé consiste à former la différence $S(\lambda_{i+1})-S(\lambda_i)$ des signaux fournis par le détecteur quantique (26) pour chacune des positions du front d'absorption correspondant aux longueurs d'onde successives $\lambda_0,..., \lambda_n$ pris deux à deux consécutivement.

9. Procédé selon la revendication 7, selon lequel ledit procédé consiste à former le rapport des signaux $S(\lambda_{i+1})/S(\lambda_1)$ fournis par le détecteur quantique (26) pour chacune des positions du front d'absorption correspondant aux longueurs d'onde successives $\lambda_0,..., \lambda_n$.

10. Procédé selon l'une des revendications 7 à 9, consistant à déplacer le front d'absorption de la sensibilité spectrale du détecteur quantique (26) en faisant varier un paramètre physique dont dépend la position dudit front d'absorption.

11. Procédé de mesure de l'énergie d'un rayonnement électromagnétique consistant à effectuer les étapes suivantes :

- émettre ledit rayonnement électromagnétique sur un domaine spectral déterminé,
- filtrer le rayonnement électromagnétique,

- détecter le rayonnement électromagnétique et en déduire la mesure de l'énergie de ce rayonnement électromagnétique,

**caractérisé en ce que** les étapes de filtrage et de détection sont confondues et réalisées par un détecteur de type quantique (46), qui présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique, ledit procédé consistant à utiliser le front d'absorption de la sensibilité spectrale du détecteur quantique (46) pour en déduire la mesure de l'énergie de ce rayonnement électromagnétique.

12. Procédé selon la revendication 11, selon lequel ledit procédé consiste à effectuer les étapes suivantes :

- déplacer le front d'absorption de la sensibilité spectrale du détecteur quantique (46) d'une position correspondant à une longueur d'onde $\lambda_0$ vers une position correspondant à une longueur d'onde $\lambda_1$ qui sont toutes deux incluses dans le domaine spectral du rayonnement électromagnétique émis et
- combiner les signaux fournis par le détecteur quantique (46) pour chacune des positions du front d'absorption correspondant aux longueurs d'onde $\lambda_0$ et $\lambda_1$ et en déduire la mesure de l'énergie du rayonnement électromagnétique dans la gamme de longueurs d'onde comprises entre $\lambda_0$ et $\lambda_1$.

13. Procédé selon la revendication 12, selon lequel ledit procédé consiste à former la différence des signaux fournis par le détecteur quantique (46) pour chacune des positions du front d'absorption correspondant aux longueurs d'onde $\lambda_0$ et $\lambda_1$.

14. Procédé selon la revendication 12, selon lequel ledit procédé consiste à former le rapport des signaux fournis par le détecteur quantique (46) pour chacune des positions du front d'absorption correspondant aux longueurs d'onde $\lambda_0$ et $\lambda_1$.

15. Procédé selon l'une des revendications 12 à 14, consistant à déplacer le front d'absorption de la sensibilité spectrale du détecteur quantique (46) en faisant varier un paramètre physique dont dépend la position dudit front d'absorption.

16. Dispositif (20) de mesure de l'absorption spectrale d'un corps (24) vis-à-vis d'un rayonnement électromagnétique pour la mise en oeuvre du procédé selon l'une des revendications là 6, comprenant :

- au moins une source (22) d'émission dudit rayonnement électromagnétique sur un domaine spectral déterminé en direction dudit corps (24),
- des moyens de filtrage dudit rayonnement électromagnétique,
- des moyens de détection dudit rayonnement électromagnétique fournissant un signal électrique représentatif de la mesure de l'absorption spectrale de ce corps,

**caractérisé en ce que** les moyens de filtrage et les moyens de détection sont confondus et sont constitués par un détecteur de type quantique (26).

17. Dispositif selon la revendication 16, dans lequel le détecteur quantique (26) présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique, ledit dispositif comprenant en outre :

- des moyens (34, 36, 38, 40) de déplacement du front d'absorption de la sensibilité spectrale du détecteur quantique d'une position correspondant à une longueur d'onde $\lambda_0$ vers une position correspondant à une longueur d'onde $\lambda_1$ qui sont toutes deux incluses dans le domaine spectral du rayonnement électromagnétique émis et,
- des moyens (30) de combinaison des signaux fournis par le détecteur quantique pour chacune des positions du front d'absorption correspondant aux longueurs d'onde $\lambda_0$ et $\lambda_1$ et de déduction de la mesure de l'absorption spectrale de ce corps dans la gamme de longueurs d'onde comprises entre $\lambda_0$ et $\lambda_1$.

18. Dispositif selon la revendication 17, dans lequel les moyens (34, 36, 38, 40) de déplacement du front d'absorption sont constitués de moyens pour faire varier un paramètre physique dont dépend la position dudit front d'absorption.

**19.** Dispositif selon la revendication 18, dans lequel le paramètre physique est la température et les moyens pour faire varier la température du détecteur quantique comprennent un élément (34) alimenté par une source de courant variable (36) et utilisant des jonctions à effet Peltier avec lequel ledit détecteur quantique est maintenu en contact thermique ainsi qu'un élément thermométrique (38) associé audit détecteur quantique (26).

**20.** Dispositif selon la revendication 17, dans lequel les moyens (30) de combinaison des signaux fournis par le détecteur quantique pour chacune des positions du front d'absorption correspondant aux longueurs d'onde $\lambda_0$ et $\lambda_1$ sont constitués de moyens pour former la différence de ces signaux.

**21.** Dispositif selon la revendication 17, dans lequel les moyens (30) de combinaison des signaux fournis par le détecteur quantique pour chacune des positions du front d'absorption correspondant aux longueurs d'onde $\lambda_0$ et $\lambda_1$ sont constitués de moyens pour former le rapport de ces signaux.

**22.** Application du dispositif selon l'une des revendications 16 à 21, pour laquelle le corps est un gaz.

**23.** Dispositif de détermination du pouvoir calorifique d'un gaz constitué de constituants combustibles pour la mise en oeuvre du procédé selon l'une des revendications 7 à 10, comprenant :

- au moins une source (22) d'émission dudit rayonnement électromagnétique à travers le gaz sur un domaine spectral déterminé dans lequel le gaz présente de l'absorption,
- des moyens de filtrage dudit rayonnement électromagnétique,
- des moyens de détection dudit rayonnement électromagnétique atténué par l'absorption due aux constituants combustibles,

**caractérisé en ce que** lesdits moyens de détection et de filtrage sont confondus et constitués d'un détecteur quantique qui présente une sensibilité spectrale ayant un front d'absorption correspondant à l'énergie de transition dudit détecteur, le dispositif comprend en outre :

- des moyens (34, 36, 38, 40) de déplacement dudit front d'absorption de la sensibilité spectrale du détecteur sur des positions correspondant à des longueurs d'onde successives $\lambda_0,..., \lambda_n$, incluses dans le domaine spectral déterminé, ledit détecteur fournissant un signal $S(\lambda_i)$ correspondant à l'énergie électromagnétique reçue par le détecteur quantique pour chacune des positions du front d'absorption sur une longueur d'onde $\lambda_i$,
- des moyens (30) de combinaison des signaux successifs fournis par le détecteur quantique $S(\lambda_i)$, $i = 0,...,n$, de manière à isoler l'absorption spectrale des constituants combustibles sur chaque gamme de longueurs d'onde $(\lambda_i; \lambda_{i+1})$,
- des moyens (30), d'une part, de comparaison des combinaisons de signaux précédemment obtenues à des combinaisons de signaux obtenues préalablement lors d'une étape d'étalonnage sur un gaz de référence de composition connue et, d'autre part, de déduction de la valeur du pouvoir calorifique du gaz.

**24.** Dispositif selon la revendication 23, dans lequel les moyens (30) de combinaison des signaux fournis par le détecteur quantique (26) pour chacune des positions du front d'absorption correspondant aux longueurs d'onde successives $\lambda_0,..., \lambda_n$ sont constitués de moyens pour former la différence de ces signaux pris deux à deux consécutivement $S(\lambda_{i+1})-S(\lambda_i)$.

**25.** Dispositif selon la revendication 23, dans lequel les moyens (30) de combinaison des signaux fournis par le détecteur quantique (26) pour chacune des positions du front d'absorption correspondant aux longueurs d'onde $\lambda_0$ et $\lambda_1$ sont constitués de moyens pour former le rapport de ces signaux pris deux à deux consécutivement $S(\lambda_{i+1})/S(\lambda_i)$.

**26.** Dispositif (42) de mesure de l'énergie d'un rayonnement électromagnétique pour la mise en oeuvre du procédé selon l'une des revendications 11 à 15, comprenant :

- au moins une source (44) d'émission dudit rayonnement électromagnétique sur un domaine spectral déterminé,
- des moyens de filtrage dudit rayonnement électromagnétique,
- des moyens de détection dudit rayonnement électromagnétique fournissant un signal électrique représentatif de la mesure de l'énergie de ce rayonnement électromagnétique, **caractérisé en ce que** les moyens de filtrage et les moyens de détection sont confondus et sont constitués par un détecteur de type quantique (46).

**27.** Dispositif selon la revendication 26, dans lequel le détecteur quantique (46) présente une sensibilité spectrale ayant un front d'absorption correspondant à l'énergie de transition dudit détecteur pour une longueur d'onde donnée et fournit un signal correspondant à l'énergie électromagnétique reçue par ledit détecteur quantique, ledit dispositif (42) comprenant en outre :

- des moyens (54, 56, 58, 60) de déplacement du front d'absorption de la sensibilité spectrale du détecteur quantique (46) d'une position correspondant à une longueur d'onde $\lambda_0$ vers une position correspondant à une longueur d'onde $\lambda_1$ qui sont toutes deux incluses dans le domaine spectral du rayonnement électromagnétique émis et,
- des moyens (50) pour combiner des signaux fournis par le détecteur quantique (46) pour chacune des positions du front d'absorption correspondant aux longueurs d'onde $\lambda_0$ et $\lambda_1$ et pour en déduire la mesure de l'énergie dudit rayonnement électromagnétique dans la gamme de longueurs d'onde comprises entre $\lambda_0$ et $\lambda_1$.

**28.** Dispositif selon la revendication 23 à 27, dans lequel les moyens (34, 36, 38, 40 ; 54, 56, 58, 60) de déplacement du front d'absorption sont constitués de moyens pour faire varier un paramètre physique dont dépend la position dudit front d'absorption.

**29.** Dispositif selon la revendication 28, dans lequel le paramètre physique est la température et les moyens pour faire varier la température du détecteur quantique (26 ; 46) comprennent un élément alimenté par une source de courant variable (36 ; 60) et utilisant des jonctions à effet Peltier avec lequel ledit détecteur quantique est maintenu en contact thermique ainsi qu'un élément thermométrique (38 ; 54) associé audit détecteur quantique.

**Claims**

**1.** A method of measuring the spectral absorption of a body (24) placed between a source (22) for emitting electromagnetic radiation and a detector (26) for detecting said radiation, the method consisting in performing the following steps:

- emitting said electromagnetic radiation in a determined spectral range towards said body;
- filtering the electromagnetic radiation; and
- detecting the electromagnetic radiation attenuated by the absorption due to the body (24) and deducing therefrom a measure of the spectral absorption of said body,
  the method being **characterized in that** the filtering and detection steps are combined and implemented by a quantum type detector (26) which presents spectral sensitivity having an absorption front at a given wavelength that corresponds to the bandgap of said detector and delivers a signal corresponding to the electromagnetic energy received by said quantum detector, said method consisting in using the absorption front of the spectral sensitivity of the quantum detector to deduce therefrom the measure of the spectral absorption of the body (24).

**2.** A method according to claim 1, in which said method consists in performing the following steps:

- moving the absorption front of the spectral sensitivity of the quantum detector (26) from a position corresponding to a wavelength $\lambda_0$ towards a position corresponding to a wavelength $\lambda_1$, both of which wavelengths are included in the spectral range of the emitted electromagnetic radiation; and
- combining the signals delivered by the quantum detector for the respective positions of the absorption front corresponding to the wavelengths $\lambda_0$ and $\lambda_1$ and deducing therefrom the measure of the spectral absorption of the body (24) in the wavelength interval lying between $\lambda_0$ and $\lambda_1$.

**3.** A method according to claim 2, in which said method consists in taking the difference between the signals delivered by the quantum detector for each of the positions of the absorption front corresponding to the wavelengths $\lambda_0$ and $\lambda_1$.

**4.** A method according to claim 2, in which said method consists in taking the ratio of the signals delivered by the quantum detector (26) for each of the positions of the absorption front corresponding to the wavelengths $\lambda_0$ and $\lambda_1$.

**5.** A method according to any one of claims 2 to 4, consisting in moving the absorption front of the spectral sensitivity of the quantum detector (26) by varying a physical parameter on which the position of said absorption front depends.

6. Application of the method according to any one of claims 1 to 5, in which said body is a gas.

7. A method of determining the calorific value of a gas constituted by fuel components, the method consisting in performing the following steps:

    - emitting said electromagnetic radiation through said gas in a determined spectral range in which the gas presents absorption;
    - filtering the electromagnetic radiation; and
    - detecting the electromagnetic radiation attenuated by the absorption due to the fuel components, the method being **characterized in that** the filtering and detection steps are combined and implemented by a quantum type detector (26) which presents spectral sensitivity having an absorption front corresponding to the bandgap of said detector, while successively moving said absorption front of the detector to positions corresponding to successive wavelengths $\lambda_0, ..., \lambda_n$ included in the spectral range, said detector delivering a signal $S(\lambda_i)$ corresponding to the electromagnetic energy received by the quantum detector (26) at each of the positions of the absorption front at wavelength $\lambda_i$; said method further consisting in:

    - combining the successive signals delivered by the quantum detector $S(\lambda_i)$, i = 0, ..., n so as to isolate the spectral absorption of the fuel components over each wavelength interval $(\lambda_i; \lambda_{i+1})$; and
    - comparing the above-obtained signal combinations with signal combinations previously obtained during a calibration step on a reference gas of known composition, and deducing therefrom the calorific value of the gas.

8. A method according to claim 7, in which said method consists in taking the difference $S(\lambda_{i+1})-S(\lambda_i)$ between the signals delivered by the quantum detector (26) at each of the positions of the absorption front corresponding to the successive wavelengths $\lambda_0, ..., \lambda_n$, taken in consecutive pairs.

9. A method according to claim 7, in which the method consists in taking the ratio $S(\lambda_{i+1})/S(\lambda_i)$ of the signals delivered by the quantum detector (26) at each of the positions of the absorption front corresponding to the successive wavelengths $\lambda_0, ..., \lambda_n$.

10. A method according to any one of claims 7 to 9, consisting in moving the absorption front of the spectral sensitivity of the quantum detector (26) by varying a physical parameter on which the position of said absorption front depends.

11. A method of measuring the energy of electromagnetic radiation, the method consisting in performing the following steps:

    - emitting said electromagnetic radiation in a determined spectral range;
    - filtering the electromagnetic radiation; and
    - detecting the electromagnetic radiation and deducing therefrom a measure of the energy of said electromagnetic radiation, the method being **characterized in that** the filtering and detection steps are combined and implemented by a quantum type detector (46) which presents special sensitivity having an absorption front at a given wavelength that corresponds to the bandgap of said detector and delivering a signal corresponding to the electromagnetic energy received by said quantum detector, the method consisting in using the absorption front of the spectral sensitivity of the quantum detector (46) to deduce therefrom the measure of the energy of said electromagnetic radiation.

12. A method according to claim 11, in which said method consists in performing the following steps:

    - moving the absorption front of the spectral sensitivity of the quantum detector (46) from a position corresponding to a wavelength $\lambda_0$ to a position corresponding to a wavelength $\lambda_1$ both of which lie in the spectral range of the emitted electromagnetic radiation; and
    - combining the signals delivered by the quantum detector (46) at each of the positions of the absorption front corresponding to the wavelengths $\lambda_0$ and $\lambda_1$ and in deducing therefrom the measure of the energy of the electromagnetic radiation in the wavelength interval lying between $\lambda_0$ and $\lambda_1$.

13. A method according to claim 12, in which said method consists in taking the difference between the signals delivered by the quantum detector (46) at the positions of the absorption front corresponding to the wavelengths $\lambda_0$ and $\lambda_1$ respectively.

**14.** A method according to claim 12, in which said method consists in taking the ratio of the signals delivered by the quantum detector (46) for each of the positions of the absorption front corresponding to the wavelengths $\lambda_0$ and $\lambda_1$ respectively.

**15.** A method according to any one of claims 12 to 14, consisting in moving the absorption front of the spectral sensitivity of the quantum detector (46) by varying a physical parameter on which the position of said absorption front depends.

**16.** Apparatus (20) for measuring the spectral absorption of a body (24) relative to electromagnetic radiation to implement the method according to any one of claims 1 to 6, the apparatus comprising:

- at least one source (22) for emitting said electromagnetic radiation over a determined spectral range towards said body (24);
- means for filtering said electromagnetic radiation; and
- means for detecting said electromagnetic radiation and delivering an electrical signal representative of the measure of the spectral absorption of said body, the apparatus being **characterized in that** the filter means and the detection means are the same means and are constituted by a quantum type detector (26).

**17.** Apparatus according to claim 16, in which the quantum detector (26) presents spectral sensitivity having an absorption front at a given wavelength that corresponds to the bandgap of said detector and delivering a signal corresponding to the electromagnetic energy received by said quantum detector, said apparatus further comprising:

- means (34, 36, 38, 40) for moving the absorption front of the spectral sensitivity of the quantum detector from a position corresponding to a wavelength $\lambda_0$ towards a position corresponding to a wavelength $\lambda_1$, both of which wavelengths lie in the spectral range of the emitted electromagnetic radiation; and
- means (30) for combining the signals delivered by the quantum detector for each of the positions of the absorption front corresponding to the wavelengths $\lambda_0$ and $\lambda_1$ and for deducing the measure of the spectral absorption of said body in the wavelength interval lying between $\lambda_0$ and $\lambda_1$.

**18.** Apparatus according to claim 17, in which the means (34, 36, 38, 40) for moving the absorption front are constituted by means for varying a physical parameter on which the position of said absorption front depends.

**19.** Apparatus according to claim 18, in which the physical parameter is temperature and the means for varying the temperature of the quantum detector comprise an element (34) powered by a variable electricity source (36) and using Peltier effect junctions with which said quantum detector is maintained in thermal contact together with a thermometer element (38) associated with said quantum detector (26).

**20.** Apparatus according to claim 17, in which the means (30) for combining the signals delivered by the quantum detector at each of the positions of the absorption front corresponding to the wavelengths $\lambda_0$ and $\lambda_1$ are constituted by means for taking the difference between said signals.

**21.** Apparatus according to claim 17, in which the means (30) for combining the signals delivered by the quantum detector at each of the positions of the absorption front corresponding to the wavelengths $\lambda_0$ and $\lambda_1$ are constituted by means for taking the ratio of said signals.

**22.** The use of the apparatus according to any one of claims 16 to 21, in which the body is a gas.

**23.** Apparatus for determining the calorific value of a gas constituted by fuel components, by implementing the method according to any one of claims 7 to 10, the apparatus comprising:

- at least one source (22) for emitting said electromagnetic radiation through the gas in a determined spectral range in which the gas presents absorption;
- means for filtering said electromagnetic radiation; and
- means for detecting said electromagnetic radiation attenuated by the absorption due to the fuel components,

the apparatus being **characterized in that** said detection and filtering means are combined and constituted by a quantum detector presenting spectral sensitivity that has an absorption front corresponding to the bandgap of said detector, the apparatus further comprises:

means (34, 36, 38, 40) for moving said absorption front of the spectral sensitivity of the detector to positions corresponding to successive wavelengths $\lambda_0$, ..., $\lambda_n$ included in the determined spectral range, said detector delivering a signal $S(\lambda_i)$ corresponding to the electromagnetic energy received by the quantum detector for each of the positions of the absorption front at a wavelength $\lambda_i$;

- means (30) for combining successive signals delivered by the quantum detector $S(\lambda_i)$, i = 0, ..., n in such a manner as to isolate the spectral absorption of the fuel components in each wavelength interval $(\lambda_i; \lambda_{i+1})$; and

- means (30) firstly for comparing the above-obtained signal combinations with signal combinations obtained previously during a calibration step on a reference gas of known composition, and secondly for deducing the calorific value of a gas.

24. Apparatus according to claim 23, in which the means (30) for combining the signals delivered by the quantum detector (26) for each of the positions of the absorption front corresponding to the successive wavelengths $\lambda_0$, ..., $\lambda_n$ are constituted by means for taking the difference $S(\lambda_{i+1})-S(\lambda_i)$ between said signals taken in consecutive pairs.

25. Apparatus according to claim 23, in which the means (30) for combining the signals delivered by the quantum detector (26) for each of the positions of the absorption front corresponding to the successive wavelengths $\lambda_0$ and $\lambda_1$ are constituted by means for taking the ratio $S(\lambda_{i+1})/S(\lambda_i)$ of said signals taken in consecutive pairs.

26. Apparatus (42) for measuring the energy of electromagnetic radiation by implementing the method according to any one of claims 11 to 15, the apparatus comprising:

   - at least one source (44) for emitting said electromagnetic radiation over a determined spectral range;
   - means for filtering said electromagnetic radiation; and
   - means for detecting said electromagnetic radiation and delivering an electrical signal representative of the measure of the energy of said electromagnetic radiation, the apparatus being **characterized in that** the filter means and the detection means are the same means and are constituted by a quantum type detector (46).

27. Apparatus according to claim 26, in which the quantum detector (46) presents a spectral sensitivity having an absorption front at a given wavelength that corresponds to the bandgap of said detector and delivering a signal corresponding to the electromagnetic energy received by said quantum detector, the apparatus (42) further comprising:

   - means (54, 56, 58, 60) for moving the absorption front of the spectral sensitivity of the quantum detector (46) from a position corresponding to a wavelength $\lambda_0$ towards a position corresponding to a wavelength $\lambda_1$, both of which wavelengths are included in the spectral range of the emitted electromagnetic radiation; and
   - means (50) for combining the signals delivered by the quantum detector (46) for each of the positions of the absorption front corresponding to the wavelengths $\lambda_0$ and $\lambda_1$, and for deducing therefrom the measure of the energy of said electromagnetic radiation in the wavelength interval lying between $\lambda_0$ and $\lambda_1$.

28. Apparatus according to claim 23 to 27, in which the means (34, 36, 38, 40; 54, 56, 58, 60) for moving the absorption front are constituted by means for varying a physical parameter on which the position of said absorption front depends.

29. Apparatus according to claim 28, in which the physical parameter is temperature and the means for varying the temperature of the quantum detector (26; 46) comprise an element powered by a variable electricity source (36; 60) and using Peltier effect junctions with which said quantum detector is maintained in thermal contact together with a thermometer element (38; 54) associated with said quantum detector.

**Patentansprüche**

1. Verfahren zur Messung der Spektralabsorption eines zwischen einer Quelle (22) zur Emission einer elektromagnetischer Strahlung und einem Detektor (26) dieser Strahlung platzierten Körpers (24), welches darin besteht, die folgenden Schritte auszuführen:

   Aussenden der elektromagnetischen Strahlung in Richtung des Körpers in einem bestimmten Spektralbereich,
   Filtern der elektromagnetischen Strahlung,
   Erfassen der durch die Absorption des Körpers (24) geschwächten elektromagnetischen Strahlung und hieraus Ableiten des Maßes der Spektralabsorption dieses Körpers,

**dadurch gekennzeichnet, dass** die Schritte der Filterung und der Erfassung vereinigt sind und durch einen Detektor vom Quantentyp (26) erfolgen, welcher eine spektrale Empfindlichkeit mit einer für eine gegebene Wellenlänge der Übergangsenergie des Detektors entsprechenden Absorptionsfront aufweist, und ein der von dem Quantendetektor empfangenen elektromagnetischen Energie entsprechendes Signal abgibt, wobei das Verfahren darin besteht, die Absorptionsfront der spektralen Empfindlichkeit des Quantendetektors zu nutzen um hieraus das Maß der Spektralabsorption des Körpers (24) abzuleiten.

2. Verfahren nach Anspruch 1, nach welchem das Verfahren darin besteht die folgenden Schritte auszuführen:

Verschieben der Absorptionsfront der spektralen Empfindlichkeit des Quantendetektors (26) von einer einer Wellenlänge $\lambda 0$ entsprechenden Position zu einer einer Wellenlänge $\lambda 1$ entsprechenden Position, welche beide in dem Spektralbereich der emittierten elektromagnetischen Strahlung enthalten sind, und Kombinieren der von dem Quantendetektor für jede der den Wellenlängen $\lambda 0$ und $\lambda 1$ entsprechenden Positionen der Absorptionsfront abgegebenen Signale, und hieraus Ableiten des Maßes der Spektralabsorption des Körpers (24) in dem zwischen $\lambda 0$ und $\lambda 1$ liegenden Wellenlängenbereich.

3. Verfahren nach Anspruch 2, nach welchem das Verfahren darin besteht, die Differenz der von dem Quantendetektor für jede der den Wellenlängen $\lambda 0$ und $\lambda 1$ entsprechenden Positionen der Absorptionsfront abgegebenen Signale zu bilden.

4. Verfahren nach Anspruch 2, nach welchem das Verfahren darin besteht, das Verhältnis der von dem Quantendetektor (26) für jede der den Wellenlängen $\lambda 0$ und $\lambda 1$ entsprechenden Positionen der Absorptionsfront abgegebenen Signale zu bilden.

5. Verfahren nach einem der Ansprüche 2 bis 4, welches darin besteht, die Absorptionsfront der spektralen Empfindlichkeit des Quantendetektors (26) zu verschieben, indem man einen physikalischen Parameter, von dem die Position der Absorptionsfront abhängt, variieren lässt.

6. Anwendung des Verfahrens nach einem der Ansprüche 1 bis 5, in welchem der Körper ein Gas ist.

7. Verfahren zur Bestimmung des Brennwerts eines aus brennbaren Bestandteilen zusammengesetzten Gases, welches darin besteht, die folgenden Schritte auszuführen:

Emittieren der elektromagnetischen Strahlung durch das Gas hindurch, in einem bestimmten Spektralbereich, in welchem das Gas die Absorption aufweist,
Filtern der elektromagnetischen Strahlung,
Erfassen der durch die Absorption der brennbaren Bestandteile geschwächten elektromagnetischen Strahlung,

**dadurch gekennzeichnet, dass** die Schritte der Filterung und der Erfassung vereinigt sind und durch einen Detektor vom Quantentyp (26) erfolgen, welcher eine spektrale Empfindlichkeit mit einer der Übergangsenergie des Detektors entsprechenden Absorptionsfront aufweist, wobei die Absorptionsfront des Detektors sukzessiv auf Positionen verschoben wird, die den im Spektralbereich enthaltenen sukzessiven Wellenlängen $\lambda 0,...,\lambda n$ entsprechen, wobei der Detektor ein Signal $S(\lambda i)$ abgibt, welches der von dem Quantendetektor (26) für jede der Positionen der Absorptionsfront bei einer Wellenlänge $\lambda i$ empfangenen Energie entspricht,
wobei das Verfahren außerdem darin besteht:

Kombinieren der von dem Quantendetektor abgegebenen sukzessiven Signale $S(\lambda i)$, $i = 0,...,n$, um die Spektralabsorption der brennbaren Bestandteile in jedem Wellenlängenbereich $(\lambda i; \lambda i+1)$ zu isolieren,
Vergleichen der Kombinationen der zuvor gewonnenen Signale mit Kombinationen von Signalen, die früher bei einem Eichschritt in einem Referenzgas mit bekannter Zusammensetzung gewonnen wurden, und hieraus Ableiten des Brennwerts des Gases.

8. Verfahren nach Anspruch 7, nach welchem das Verfahren darin besteht, die Differenz $S(\lambda i+1)-S(\lambda i)$ der Signale zu bilden, welche von dem Quantendetektor (26) für jede der den sukzessiven Wellenlängen $\lambda 0,...,\lambda n$ entsprechenden Positionen der Absorptionsfront, welche aufeinanderfolgend paarweise genommen werden, abgegeben werden.

9. Verfahren nach Anspruch 7, nach welchem das Verfahren darin besteht, das Verhältnis der Signale S($\lambda$i+1)/S($\lambda$i) zu bilden, welche von dem Quantendetektor (26) für jede der den sukzessiven Wellenlängen $\lambda$0,...,$\lambda$n entsprechenden Positionen der Absorptionsfront abgegeben werden.

10. Verfahren nach einem der Ansprüche 7 bis 9, welches darin besteht, die Absorptionsfront der spektralen Empfindlichkeit des Quantendetektors (26) zu verschieben, indem man einen physikalischen Parameter, von dem die Position der Absorptionsfront abhängt, variieren lässt.

11. Verfahren zur Messung der Energie einer elektromagnetischen Strahlung, welches darin besteht, die folgenden Schritte auszuführen:

Emittieren der elektromagnetischen Strahlung in einem bestimmten Spektralbereich, Filtern der elektromagnetischen Strahlung,
Erfassen der elektromagnetischen Strahlung und hieraus Ableiten der Energie dieser elektromagnetischen Strahlung,

**dadurch gekennzeichnet, dass** die Schritte der Filterung und der Erfassung vereinigt sind und durch einen Detektor vom Quantentyp (46) erfolgen, welcher eine spektrale Empfindlichkeit mit einer für eine gegebene Wellenlänge der Übergangsenergie des Detektors entsprechenden Absorptionsfront aufweist, und ein der von dem Quantendetektor empfangenen elektromagnetischen Energie entsprechendes Signal abgibt, wobei das Verfahren darin besteht, die Absorptionsfront der spektralen Empfindlichkeit des Quantendetektors (46) zu nutzen um hieraus das Maß der Energie dieser elektromagnetischen Strahlung abzuleiten.

12. Verfahren nach Anspruch 11, nach welchem das Verfahren darin besteht, die folgenden Schritte auszuführen:

Verschieben der Absorptionsfront der spektralen Empfindlichkeit des Quantendetektors (46) von einer einer Wellenlänge $\lambda$0 entsprechenden Position zu einer einer Wellenlänge $\lambda$1 entsprechenden Position, welche beide in dem Spektralbereich der emittierten elektromagnetischen Strahlung enthalten sind, und
Kombinieren der von dem Quantendetektor (46) für jede der den Wellenlängen $\lambda$0 und $\lambda$1 entsprechenden Positionen der Absorptionsfront abgegebenen Signale und hieraus Ableiten des Maßes der Energie der elektromagnetischen Strahlung in dem zwischen $\lambda$0 und $\lambda$1 liegenden Wellenlängenbereich.

13. Verfahren nach Anspruch 12, nach welchem das Verfahren darin besteht, die Differenz der von dem Quantendetektor (46) für jede der den Wellenlängen $\lambda$0 und $\lambda$1 entsprechenden Positionen der Absorptionsfront abgegebenen Signale zu bilden.

14. Verfahren nach Anspruch 12, nach welchem das Verfahren darin besteht, das Verhältnis der von dem Quantendetektor (46) für jede der den Wellenlängen $\lambda$0 und $\lambda$1 entsprechenden Positionen der Absorptionsfront abgegebenen Signale zu bilden.

15. Verfahren nach einem der Ansprüche 12 bis 14, welches darin besteht, die Absorptionsfront der spektralen Empfindlichkeit des Quantendetektors (46) zu verschieben, indem man einen physikalischen Parameter, von dem die Position der Absorptionsfront abhängt, variieren lässt.

16. Vorrichtung (20) zur Messung der Spektralabsorption eines Körpers (24) gegenüber einer elektromagnetischen Strahlung zur Durchführung des Verfahrens nach einem der Ansprüche 1 bis 6, welche umfasst:

wenigstens eine Quelle (22) zur Emission der elektromagnetischen Strahlung in einem bestimmten Spektralbereich in Richtung des Körpers (24),
Mittel zum Filter der elektromagnetischen Strahlung,
Mittel zur Erfassung der elektromagnetischen Strahlung, welche ein elektrisches Signal abgeben, das für das Maß der Spektralabsorption dieses Körpers repräsentativ ist,

**dadurch gekennzeichnet, dass** die Mittel zum Filtern und die Mittel zur Erfassung vereinigt und durch einen Detektor vom Quantentyp (26) gebildet sind.

**17.** Vorrichtung nach Anspruch 16, in welcher der Quantendetektor (26) eine spektrale Empfindlichkeit mit einer für eine gegebene Wellenlänge der Übergangsenergie des Detektors entsprechenden Absorptionsfront aufweist, und ein der von dem Quantendetektor empfangenen elektromagnetischen Energie entsprechendes Signal abgibt, welche Vorrichtung ferner umfasst:

Mittel (34, 36, 38, 40) zur Verschiebung der Absorptionsfront der spektralen Empfindlichkeit des Quantendetektors von einer einer Wellenlänge $\lambda 0$ entsprechenden Position zu einer einer Wellenlänge $\lambda 1$ entsprechenden Position, welche beide in dem Spektralbereich der emittierten elektromagnetischen Strahlung enthalten sind, und

Mittel (30) zum Kombinieren der von dem Quantendetektor für jede der den Wellenlängen $\lambda 0$ und $\lambda 1$ entsprechenden Positionen der Absorptionsfront abgegebenen Signale und zum Ableiten des Maßes der Spektralabsorption dieses Körpers in dem zwischen $\lambda 0$ und $\lambda 1$ liegenden Wellenlängenbereich.

**18.** Vorrichtung nach Anspruch 17, in welcher die Mittel (34, 36, 38, 40) zur Verschiebung der Absorptionsfront aus Mitteln bestehen, um einen physikalischen Parameter, von dem die Position der Absorptionsfront abhängt, variieren zu lassen.

**19.** Vorrichtung nach Anspruch 18, in welcher der physikalische Parameter die Temperatur ist und die Mittel zum Variieren lassen der Temperatur des Quantendetektors ein Element (34), das von einer variablen Stromquelle (36) gespeist ist und mit dem Quantendetektor in einem thermischen Kontakt gehaltene Peltier-Effekt-Übergänge nutzt, sowie ein thermometrisches Element (38), das mit dem Quantendetektor (26) verbunden ist, umfassen.

**20.** Vorrichtung nach Anspruch 17, in welcher die Mittel (30) zum Kombinieren der von dem Quantendetektor für jede der den Wellenlängen $\lambda 0$ und $\lambda 1$ entsprechenden Positionen der Absorptionsfront abgegebenen Signale aus Mitteln bestehen, um die Differenz dieser Signale zu bilden.

**21.** Vorrichtung nach Anspruch 17, in welcher die Mittel (30) zum Kombinieren der von dem Quantendetektor für jede der den Wellenlängen $\lambda 0$ und $\lambda 1$ entsprechenden Positionen der Absorptionsfront abgegebenen Signale aus Mitteln bestehen, um das Verhältnis dieser Signale zu bilden.

**22.** Anwendung der Vorrichtung nach einem der Ansprüche 16 bis 21, für welche der Körper ein Gas ist.

**23.** Vorrichtung zur Bestimmung des Brennwerts eines aus brennbaren Bestandteilen zusammengesetzten Gases zur Durchführung des Verfahrens nach einem der Ansprüche 7 bis 10, welche umfasst:

wenigstens eine Quelle (22) zum Emittieren der elektromagnetischen Strahlung durch das Gas in einem bestimmten Spektralbereich, in welchem das Gas die Absorption aufweist,
Mittel zum Filtern der elektromagnetischen Strahlung,
Mittel zum Erfassen der durch die Absorption der brennbaren Bestandteile geschwächten elektromagnetischen Strahlung,

**dadurch gekennzeichnet, dass** die Mittel zum Erfassen und Filtern vereinigt und durch einen Quantendetektor (26) gebildet sind, welcher eine spektrale Empfindlichkeit mit einer der Übergangsenergie des Detektors entsprechenden Absorptionsfront aufweist,
wobei die Vorrichtung ferner umfasst:

Mittel (34, 36, 38, 40) zur Verschiebung der Absorptionsfront der spektralen Empfindlichkeit des Detektors auf Positionen, die den im bestimmen Spektralbereich enthaltenen sukzessiven Wellenlängen $\lambda 0,...,\lambda n$ entsprechen, wobei der Detektor ein Signal $S(\lambda i)$ abgibt, welches der von dem Quantendetektor für jede der Positionen der Absorptionsfront bei einer Wellenlänge $\lambda i$ empfangenen elektromagnetischen Energie entspricht,
Mittel (30) zur Kombination der von dem Quantendetektor abgegebenen sukzessiven Signale $S(\lambda i)$, $i = 0,...,$ n, um die Spektralabsorption der brennbaren Bestandteile in jedem Wellenlängenbereich $(\lambda i; \lambda i+1)$ zu isolieren,
Mittel (30), einerseits zum Vergleich der Kombinationen der zuvor gewonnenen Signale mit Kombinationen von Signalen, die früher bei einem Eichschritt in einem Referenzgas mit bekannter Zusammensetzung gewonnen wurden, und andererseits zum Ableiten des Brennwerts des Gases.

**24.** Vorrichtung nach Anspruch 23, in welcher die Mittel (30) zur Kombination der von dem Quantendetektor (26) für jede der den sukzessiven Wellenlängen $\lambda 0,...,\lambda n$ entsprechenden Positionen der Absorptionsfront abgegebenen Signale aus Mitteln bestehen, um die Differenz dieser Signale, die aufeinanderfolgend paarweise S(λi+1)-S(λi) genommen werden, zu bilden.

25. Vorrichtung nach Anspruch 23, in welcher die Mittel (30) zur Kombination der von dem Quantendetektor (26) für jede der den Wellenlängen λ0 und λ1 entsprechenden Positionen der Absorptionsfront abgegebenen Signale aus Mitteln bestehen, um das Verhältnis dieser Signale, die aufeinanderfolgend paarweise S(λi+1)/S(λi) genommen werden, zu bilden.

26. Vorrichtung(42) zur Messung der Energie einer elektromagnetischen Strahlung zur Durchführung des Verfahrens nach einem der Ansprüche 11 bis 15, welche umfasst:

wenigstens eine Quelle (44) zur Emission der elektromagnetischen Strahlung in einem bestimmten Spektralbereich,
Mittel zur Filterung der elektromagnetischen Strahlung,
Mittel zur Erfassung der elektromagnetischen Strahlung, welche ein elektrisches Signal abgeben, das für das Maß der Energie dieser elektromagnetischen Strahlung repräsentativ ist,

**dadurch gekennzeichnet, dass** die Mittel zur Filterung und die Mittel zur Erfassung vereinigt und von einem Detektor vom Quantentyp (46) gebildet sind.

27. Vorrichtung nach Anspruch 26, in welcher der Quantendetektor (46) eine spektrale Empfindlichkeit mit einer der Übergangsenergie des Detektors für eine gegebene Wellenlänge entsprechenden Absorptionsfront aufweist, und ein der von dem Quantendetektor empfangenen elektromagnetischen Energie entsprechendes Signal abgibt, wobei die Vorrichtung (42) ferner umfasst:

Mittel (54, 56, 58, 60) zur Verschiebung der Absorptionsfront der spektralen Empfindlichkeit des Quantendetektors (46) von einer einer Wellenlänge λ0 entsprechenden Position zu einer einer Wellenlänge λ1 entsprechenden Position, welche beide in dem Spektralbereich der emittierten elektromagnetischen Strahlung enthalten sind, und
Mittel (50) zum Kombinieren der von dem Quantendetektor (46) für jede der den Wellenlängen λ0 und λ1 entsprechenden Positionen der Absorptionsfront abgegebenen Signale, und um hieraus das Maß der Energie der elektromagnetischen Strahlung in dem zwischen λ0 und λ1 liegenden Wellenlängenbereich abzuleiten.

28. Vorrichtung nach Anspruch 23 bis 27, in welcher die Mittel (34, 36, 38, 40, 54, 56, 58, 60) zur Verschiebung der Absorptionsfront aus Mitteln gebildet sind, um einen physikalischen Parameter, von dem die Position der Absorptionsfront abhängt, variieren zu lassen.

29. Vorrichtung nach Anspruch 28, in welcher der physikalische Parameter die Temperatur ist und die Mittel um die Temperatur des Quantendetektors (26; 46) variieren zu lassen, ein Element, das von einer variablen Stromquelle (36; 60) gespeist ist und Peltier-Effekt-Übergänge nutzt, mit welchen der Quantendetektor in einem thermischen Kontakt gehalten ist, sowie ein mit dem Quantendetektor verbundenes thermometrisches Element (38; 54) umfassen.

Fig. 1

Art antérieur

Fig. 2

Fig. 3

$Tgaz$

$\lambda_0$  $\lambda_1$  $\lambda$

Fig. 4

Fig. 5

Fig. 6

Fig. 7

Fig. 8

Fig. 9